# EUROPÄISCHE PATENTSCHRIFT

(11) **EP 2 603 709 B1**
(45) Veröffentlichungstag und Bekanntmachung des Hinweises auf die Patenterteilung: **10.10.2018**
(21) Anmeldenummer: 11743451.4
(22) Anmeldetag: 09.08.2011
(51) Int. Cl.: F16D 13/54, F16D 69/02, F16D 13/64

(54) **REIBRING UND VERFAHREN ZU SEINER HERSTELLUNG**
FRICTION RING AND METHOD FOR PRODUCING SAME
BAGUE DE FRICTION ET SON PROCÉDÉ DE FABRICATION

(30) Priorität: 10.08.2010 DE 102010033876
(43) Veröffentlichungstag der Anmeldung: 19.06.2013
(73) Patentinhaber: Hoerbiger Antriebstechnik Holding GmbH, 86956 Schongau (DE)
(72) Erfinder: OHR, Andreas, 86956 Schongau (DE); BERGHEIM, Michael, 87672 Rosshaupten (DE)
(74) Vertreter: Prinz & Partner mbB
(86) Internationale Anmeldenummer: PCT/EP2011/003980
(87) Internationale Veröffentlichungsnummer: WO 2012/019751

(56) Entgegenhaltungen:
- EP-A2- 2 034 204
- DE-A1- 19 650 451
- DE-A1-102009 025 540
- DE-C1- 4 334 207
- FR-A- 1 546 163
- US-A- 2 790 206

## Beschreibung

Die Erfindung betrifft ein Verfahren zur Herstellung eines solchen Reibrings mit einem Träger und einem Reibbelag, wie er beispielsweise in nasslaufenden Kupplungen oder in Getrieben verwendet werden kann. Bestimmend für die Qualität des Reibrings, also insbesondere für das Verschleißverhalten und den Reibwert über die gesamte Lebensdauer, ist der Reibbelag. Zum einen wird grundsätzlich ein hoher Reibwert gewünscht, da dies das Schaltverhalten verbessert. Zum anderen wird ein möglichst geringer Verschleiß gefordert, damit der Reibring eine lange Lebensdauer hat. Zusätzlich soll der Reibring insgesamt mit geringen Kosten hergestellt werden können.

Bekannt sind Reibringe, die einen Reibbelag aus einem papierähnlichen Material aufweisen. Dieses im Folgenden als "Reibpapier" bezeichnete Material wird aufgrund seines Herstellungsverfahrens in Form von Bögen geliefert. Aus den Reibpapier-Bögen werden dann einzelne Reibbelag-Segmente ausgeschnitten und auf den Träger aufgebracht, beispielsweise aufgeklebt. Nachteilig ist dabei der unvermeidbare Verschnitt. Außerdem sind die Herstellungskosten von Reibpapier vergleichsweise hoch.

Es sind auch verschiedene Versuche bekannt, den Reibbelag in einem fließfähigen Zustand auf den Träger aufzubringen und dort zu verfestigen. Ein Beispiel für ein solches Verfahren findet sich in der DE 10 2008 036 332. Dort wird auf den Träger eine Füllform aufgebracht, um ähnlich wie bei einem Siebdruckverfahren die fließfähige Reibbelagmasse aufbringen zu können. Nach dem Aufbringen wird die Reibbelagmasse getrocknet und ausgehärtet, z.B. mittels UV-Strahlung. Hinsichtlich der verwendeten Reibbelagmasse finden sich in der genannten Offenlegungsschrift nur unvollständige Angaben. Neben der Problematik des Prozesses ist bisher kein geeignetes Material bekannt, welches die Eignung für den Prozess und die Funktion gleichermaßen erfüllt. Aus diesem Grund konnten interessante Ansätze dieser Art bisher nicht erfolgreich umgesetzt werden.

In der FR 1 546 163 A ist ein Verfahren zur Herstellung eines Reibelements, insbesondere eines Brems- oder Kupplungsreibbelags beschrieben, bei dem ein Reibbelagausgangsmaterial, welches 2 - 4 Massenprozent Lösungsmittel enthält, in eine geschlossene Werkzeugform eingebracht und auf eine Solldichte des Reibbelags komprimiert wird, ohne vorher das Lösungsmittel aus dem Reibbelagausgangsmaterial zu entfernen. Das verdichtete Reibbelagausgangsmaterial wird anschließend aus der Werkzeugform entnommen und härtet dann ohne weitere Kompression bei einer Temperatur von wenigstens 177°C aus.

Die DE 196 50 451 A1 offenbart einen Reibbelag, insbesondere für Kupplungen wie Kraftfahrzeug-Reibungskupplungen, Bremsen oder dergleichen, bestehend unter anderem aus Fasern, Bindemittel und Füllstoffen. Ferner ist ein Verfahren zur Herstellung des Reibbelags angegeben, bei dem nach einem ersten formgebenden Verfahrensschritt eine Vernetzung der Bindemittel in einem Aushärtevorgang erfolgt, dann eine Oberflächenbehandlung wie zum Beispiel ein Schleifen der Reibfläche durchgeführt wird und anschließend eine weitere Vernetzung der Bindemittel in einem Aushärtevorgang erfolgt.

Die DE 43 34 207 C1 bezieht sich auf ein Verfahren zur Herstellung eines Reibbelags unter Wiederverwendung eines teilweise oder ganz abgenutzten alten Reibbelags durch Auffüllen der ehemaligen Materialstärke mittels einer Phenolharzmasse, die in eine Form eingespritzt, thermisch ausgehärtet und schließlich auf ein vorgeschriebenes Sollmaß abgeschliffen wird.

In der US 2,790,206 A ist ein Verfahren zum Härten von Reibzusammensetzungen beschrieben, welche zum Beispiel als Bremsbeläge von Kraftfahrzeugen verwendet werden können. Das Ausgangsmaterial wird dabei zunächst auf eine Solldichte gebracht, optional getrocknet und zwischen zwei Werkzeugformen eingebracht, wobei die beiden Werkzeugformen aufeinander zu bewegt werden, um die Reibzusammensetzung in eine gewünschte Form zu bringen. Anschließend werden die Reibzusammensetzungen zwischen den beiden Werkzeugformen unter Wärmezufuhr ausgehärtet.

Die EP 2 034 204 A2 zeigt analog zu der vorgenannten DE 10 2008 036 332 A1 ein Verfahren zum Aufbringen des Reibbelags nach Art eines Siebdruckverfahrens.

Die Aufgabe der Erfindung besteht daher darin, ein Verfahren zum Herstellen eines Reibrings mit Reibbelag zu schaffen, das kostengünstig ist, wobei der so hergestellte Reibring gleichzeitig die Anforderungen hinsichtlich Reibwertverhalten und Verschleiß erfüllt oder sogar noch übertrifft.

Diese Aufgabe wird erfindungsgemäß durch ein Verfahren nach Anspruch 1 gelöst.

Bei diesem Verfahren wird zunächst ein Träger bereitgestellt. Dann wird eine Fläche des Trägers, die mit dem Reibbelag versehen werden soll, vorbereitet. Anschließend wird ein Reibbelagausgangsmaterial in einer im Wesentlichen formstabilen, pastösen Verarbeitungskonsistenz ohne eine zusätzliche, das Reibbelagausgangsmaterial seitlich begrenzende Form auf die vorbereitete Fläche aufgetragen. Nachfolgend wird das Reibbelagausgangsmaterial bearbeitet und härtet schließlich zum Reibbelag mit im Wesentlichen fester Endkonsistenz aus. Mit dem erfindungsgemäßen Verfahren lassen sich mit geringem Aufwand Reibbeläge herstellen, die sich durch ein besonders gutes Verschleißverhalten auszeichnen.

Die Oberfläche des ausgehärteten Reibbelags (Reibfläche) ist insbesondere eben.

Besonders bevorzugt wird das pastöse Reibbelagausgangsmaterial mittels wenigstens einer Dosierpumpe aufgetragen. Diese Dosierpumpe wird auch als Dispenser bezeichnet und ermöglicht bei geringem Aufwand eine exakte Portionierung und Positionierung des Reibbelagausgangsmaterials auf der vorbereiteten Fläche des Trägers.

In einer Verfahrensvariante wird das Reibbelagausgangsmaterial während nur einer Umdrehung des Trägers auf die vorbereitete Fläche aufgetragen. Das Reibbelagausgangsmaterial wird hierbei gleich mit einem auf die später gewünschten Reibbelagabmessungen abgestimmten Querschnittsprofil aufgebracht, was eine sehr schnelle Beschichtung des Trägers mit dem Reibbelag ermöglicht.

In einer alternativen Verfahrensvariante wird das Reibbelagausgangsmaterial während mehrerer Umdrehungen des Trägers spiralförmig auf die vorbereitete Fläche aufgetragen. Dadurch kann bereits beim Aufbringen des Reibbelagausgangsmaterials eine Profilierung des späteren Reibbelags vorgenommen werden. Die Profilierung besteht hierbei aus spiralförmigen Längsnuten, welche sich positiv auf eine Ölzirkulation im Bereich des Reibbelags auswirken und damit eine rasche Abfuhr der im Betrieb entstehenden Reibungswärme ermöglichen.

Nach dem Auftragen des Reibbelagausgangsmaterials auf den Träger werden in einer weiteren Verfahrensvariante Reibpartikel, z.B. reibwirksame, grobe Kokspartikel auf das pastöse Reibbelagausgangsmaterial aufgebracht. Vorzugsweise dringen diese Reibpartikel bei der nachfolgenden Bearbeitung des Reibbelagausgangsmaterials zumindest teilweise in das Reibbelagausgangsmaterial ein.

Das Reibbelagausgangsmaterial kann, vorzugsweise unmittelbar nach seinem Auftragen auf den Träger, getrocknet werden. Infolge dieser Trocknung, beispielsweise mittels Heißluft, Infrarot-Strahlung oder Induktion, wird das Reibbelagausgangsmaterial vorausgehärtet, wobei die Konsistenz von pastös auf zäh bis fest übergeht.

Nach diesem optionalen Trocknungsvorgang kann das Reibbelagausgangsmaterial heißgepresst werden. Dabei härtet das Reibbelagausgangsmaterial vollständig aus und wird auf das endgültige Maß kalibriert.

Ein Reibbelagausgangsmaterial ist ein Gemisch zumindest aus einem duroplastischen Bindemittel und einem Füllstoff, wobei das Reibbelagausgangsmaterial eine nicht-fließfähige, pastöse Verarbeitungskonsistenz und der Reibbelag eine feste Endkonsistenz nach der Verarbeitung am Träger aufweist.

Als duroplastisches Bindemittel wird bevorzugt ein Phenolharz und als Füllstoff insbesondere ein organischer Füllstoff wie zum Beispiel Graphit verwendet. Bei geeignetem Mischungsverhältnis der Komponenten entsteht als Reibbelagausgangsmaterial ein Gemisch mit einer pastösen Verarbeitungskonsistenz. Als "pastös" wird das Gemisch in diesem Zusammenhang dann bezeichnet, wenn die Viskosität zwischen etwa 1 Pa·s und etwa 100 Pa·s, bevorzugt bei 1-50 Pa·s liegt. In diesem Viskositätsbereich lässt sich das Reibbelagausgangsmaterial problemlos auf die vorbereitete Fläche auftragen, ohne dass eine Füllform zur seitlichen Begrenzung des Reibbelagausgangsmaterials flüssigkeitsdicht am Träger angebracht werden muss. Dadurch vereinfacht sich die Herstellung des Reibrings erheblich, ohne nennenswerte Beeinträchtigung des Reibwerts und des Verschleißverhaltens.

In einer besonders vorteilhaften Ausführungsvariante des Reibrings ist der Reibbelag im Wesentlichen faserfrei hergestellt. Fasern, insbesondere fibrillierte Fasern wie sie bei der Herstellung von Reibpapier verwendet werden, beeinträchtigen nämlich die Verarbeitbarkeit des Reibbelagausgangsmaterials. Zudem hat sich herausgestellt, dass auch ein faserfreier Reibbelag alle technischen Anforderungen, insbesondere in Bezug auf Reibwert und Verschleiß, erfüllen kann.

In einer alternativen Ausführungsvariante weist der Reibbelag einen gewissen Anteil an Fasern, insbesondere ausschließlich nicht-fibrillierten Fasern, auf.

Der Masseanteil der Fasern liegt dann vorzugsweise im Bereich von etwa 1 % bis etwa 20 % des Feststoffanteils des Reibbelags. Ein derart geringer, vorzugsweise einstelliger Prozentanteil an nicht-fibrillierten Fasern ermöglicht noch eine pastöse Verarbeitungskonsistenz und damit eine einfache Reibringfertigung. Darüber hinaus kann dieser Faseranteil bei einigen Zusammensetzungen des Reibbelagausgangsmaterials die mechanischen Eigenschaften des späteren Reibbelags positiv beeinflussen.

Das Reibbelagausgangsmaterial kann in der Verarbeitungskonsistenz zusätzlich ein Lösungsmittel, insbesondere Wasser oder Ethanol aufweisen. Häufig wird dabei das Bindemittel bereits in gelöster Form, beispielsweise als vorgefertigte Phenolharzlösung, zugegeben.

In einer weiteren Ausführungsform weist das Reibbelagausgangsmaterial zusätzlich einen Stoff zur Einstellung einer gewünschten Verarbeitungskonsistenz auf. Dies kann insbesondere ein Verdickungs- oder Thixotropiermittel oder ein die Strukturviskosität beeinflussendes Agens sein. Das Thixotropiermittel erleichtert die Verarbeitung des Reibbelagausgangsmaterials, da es während des Auftragens die Viskosität herabsetzt, jedoch nach dem Auftragen des Reibbelagausgangsmaterials die Viskosität erhöht.

In einer weiteren Ausführungsform weist der erfindungsgemäß hergestellte Reibbelag in Umfangsrichtung Unterbrechungen und/oder ein flaches oder konisches Querschnittsprofil auf. Derartige, insbesondere als Nuten ausgeführte Unterbrechungen ermöglichen eine gute Ölzirkulation im Bereich des Reibbelags, wodurch die im Betrieb des Reibrings entstehende Reibungswärme besser abgeführt werden kann.

Der Reibbelag ist in einer weiteren Ausführungsform des Reibrings mehrschichtig aufgebaut.

Dabei kann der mehrschichtige Reibbelag wenigstens zwei Reibbelagschichten mit unterschiedlichem Reibbelagausgangsmaterial aufweisen. Dadurch lassen sich gewünschte Reibeigenschaften des Reibbelags mit geringem Aufwand sehr genau einstellen.

Gemäß einer weiteren Ausführungsform des Reibrings enthält der Reibbelag im Bereich seiner Reibfläche Reibpartikel, insbesondere Kokspartikel. Beispielsweise werden die Reibpartikel vor dem Trocknen und Aushärten des Reibbelagausgangsmaterials auf eine spätere Reibfläche des Reibbelags aufgebracht und dringen zumindest teilweise in den Reibbelag ein. Die Reibpartikel können dabei recht grob sein und eine gegebenenfalls sogar geschlossene Deckschicht auf dem Reibbelag bilden.

Ferner kann der Anteil des duroplastischen Bindemittels über eine Höhe des Reibbelags variieren, insbesondere vom Träger zu einer Reibfläche hin abnehmen.

Der erfindungsgemäß hergestellte Reibring ist besonders geeignet als Synchronring in einem Getriebe sowie für nasslaufende Lamellenreibsysteme, insbesondere nasslaufende Kupplungen und nasslaufende Bremsen.

Weitere Merkmale und Vorteile der Erfindung ergeben sich aus der nachfolgenden Beschreibung bevorzugter Ausführungsformen unter Bezugnahme auf die Zeichnungen. In diesen zeigen:
- Figuren 1 bis 5 schematisch verschiedene Schritte bei der erfindungsgemäßen Herstellung eines Reibrings mit Reibbelag gemäß einer ersten Ausführungsform;
- Figur 1 eine Ansicht eines Reibrings gemäß einer zweiten Ausführungsform beim Aufbringen des Reibbelagausgangsmaterials;
- Figur 2 einen Schnitt VII-VII durch den Reibring gemäß Figur 6;
- Figur 3 den Schnitt VII-VII durch den Reibring gemäß Figur 6 nach seiner Fertigstellung;
- Figur 4 den Schnitt VII-VII durch den Reibring gemäß Figur 6 bei veränderter Aufbringung des Reibbelagausgangsmaterials; und
- Figur 5 den Schnitt VII-VII durch den Reibring gemäß Figur 6 bei weiter veränderter Aufbringung des Reibbelagausgangsmaterials.

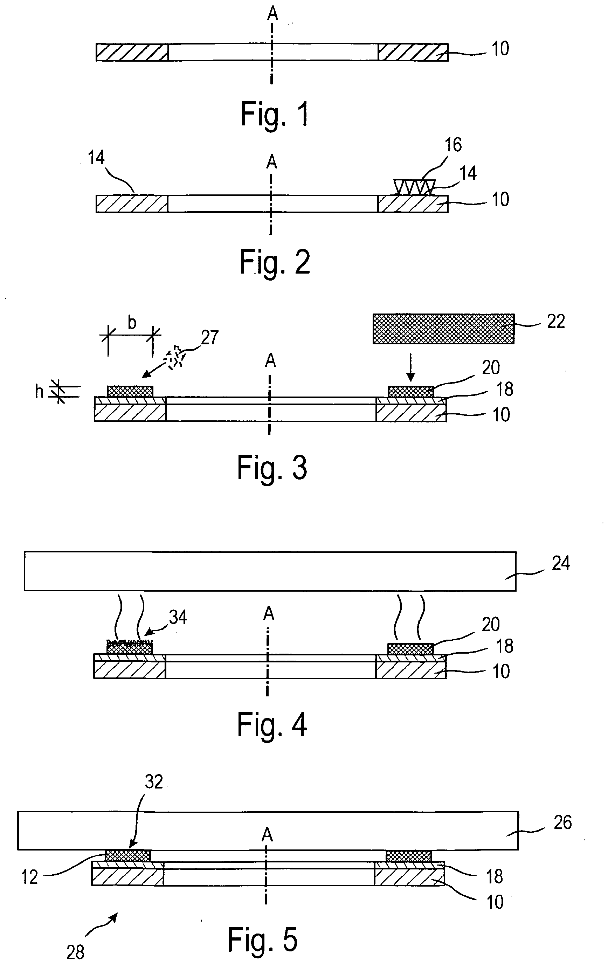

Die Figur 1 zeigt einen Träger 10 einer Reiblamelle einer nasslaufenden Kupplung, der vorzugsweise aus Metall besteht. Der Träger 10 ist hier nur schematisch dargestellt; an der Innenseite oder Außenseite vorhandene Verzahnungen, die zur Drehmomentübertragung dienen, oder vergleichbare Gestaltungen (Nuten, Keilwellenprofil, etc.) sind nicht abgebildet.

Auf mindestens eine Seite des Trägers 10 soll ein Reibbelag 12 aufgebracht werden. Zu diesem Zweck wird eine Fläche 14 des Trägers 10, auf die der Reibbelag 12 aufgebracht werden soll, aktiviert. Dies ist in Figur 2 durch Pfeile 16 dargestellt und verbessert die Verbindung zwischen dem Reibbelag 12 und dem Träger 10. Das Aktivieren kann chemisch erfolgen oder aus Umweltgesichtspunkten vorzugsweise mechanisch durch Sandstrahlen oder Kugelstrahlen.

Auf die aktivierte Fläche 14 wird gemäß Figur 3 zunächst eine Klebstoff-Zwischenschicht 18 aufgebracht, auf die wiederum ein Reibbelagausgangsmaterial 20 in einer im Wesentlichen formstabilen, pastösen Verarbeitungskonsistenz aufgetragen wird. Aufgrund der pastösen Konsistenz (Viskositätswert zwischen etwa 1 Pa·s und etwa 100 Pa·s, beispielsweise bestimmt mittels Rotationsrheometer) ist außer der vorbereiteten Fläche 14 des Trägers 10 keine zusätzliche, das Reibbelagausgangsmaterial 20 seitlich begrenzende Form nötig, wodurch das Herstellungsverfahren des Reibrings erheblich vereinfacht wird.

Bei einem ausreichend hohen Anteil an duroplastischem Bindemittel im Reibbelagausgangsmaterial 20 kann in alternativen Ausführungsformen sogar auf die Klebstoff-Zwischenschicht 18 verzichtet werden, da das Reibbelagausgangsmaterial 20 beim Aushärten mit der aktivierten Fläche 14 verklebt, ohne dass weitere Maßnahmen erforderlich sind.

Die Auftragung des Reibbelagausgangsmaterials 20 erfolgt mittels einer Dosierpumpe 22, die auch als Dispenser bezeichnet wird.

Das als Gemisch vorliegende Reibbelagausgangsmaterial 20 lässt sich durch die Dosierpumpe 22 exakt portionieren und auf der vorbereiteten Fläche 14 des Trägers 10 genau positionieren. Die Konsistenz des Gemisches ist dabei so gewählt, dass das Reibbelagausgangsmaterial 20 nach dem Aufbringen auf den Träger 10 seine Querschnittsform (Höhe h, Breite b, b') beibehält, wenn keine äußeren Einwirkungen auftreten. Aufgrund der hohen Viskosität ist der unerwünschte Effekt, dass das Reibbelagausgangsmaterial 20 auf dem Träger 10 "verläuft", das heißt die Querschnittshöhe h kontinuierlich abnimmt, während die Querschnittsbreite b kontinuierlich zunimmt, vernachlässigbar.

Nach dem Aufbringen auf den Träger 10 wird das Reibbelagausgangsmaterial 20 getrocknet (siehe Figur 4), wozu eine Trocknungsvorrichtung 24 verwendet werden kann. Anschließend wird das Reibbelagausgangsmaterial 20 heißgepresst, wodurch es zum fertigen Reibbelag 12 aushärtet und auf ca. 60 % seiner ursprünglichen Höhe h komprimiert wird, bis schließlich eine gewünschte Sollhöhe des Reibbelags 12 erreicht ist. Das Heißpressen ist in Figur 5 schematisch durch eine Kalandrierwalze 26 symbolisiert.

Nach dem Heißpressen kann der mit dem Reibbelag 12 beschichtete Träger 10 als fertiger Reibring 28 entnommen werden.

Nachdem das Reibbelagausgangsmaterial 20 auf den Träger 10 aufgetragen ist, können optional noch Reibpartikel 27, z.B. Kokspartikel, auf das pastöse Reibbelagausgangsmaterial 20 aufgebracht werden. Diese reibwirksamen Partikel 27 werden vor dem Bearbeiten, Trocknen und Aushärten des Reibbelagausgangsmaterials 20 beispielsweise auf eine spätere Reibfläche 32 des Reibbelags 12 aufgestreut und dringen insbesondere beim Heißpressen des Reibbelagausgangsmaterials 20 zumindest teilweise in den späteren Reibbelag 12 ein. Die Reibpartikel 27 können recht grob sein und eine Deckschicht 34, insbesondere eine geschlossene Deckschicht 34, auf dem Reibbelag 12 bilden (vgl. Figuren 3 und 4).

Vorzugsweise ist das Drucksteifigkeitsverhältnis des fertigen Reibbelags 12 kleiner 40 %. Das Drucksteifigkeitsverhältnis gibt das Verhältnis von plastischer zu gesamter Deformation des Reibbelags 12 an, wie es bei einem standardisierten Druck-Setzungstest ermittelt werden kann. Anders als Reibpapier, bei dem sich eine vergleichsweise hohe plastische Verformung bei Druckbelastungen ergibt, kann der faserfreie oder lediglich einen geringen Anteil an im wesentlichen nicht-fibrillierten Fasern aufweisende Reibbelag 12 in seiner Zusammensetzung so eingestellt werden, dass sich eine vergleichsweise kleine plastische Deformation bei hohem elastischem Verformungsvermögen ergibt. Dies ist vorteilhaft im Hinblick auf ein konstantes Reibverhalten über eine hohe Anzahl von Belastungszyklen.

Besonders bevorzugt ist das Drucksteifigkeitsverhältnis kleiner 30 %, insbesondere kleiner 20 %. Wenn das Verhalten des Reibbelags 12 bei Druckbelastungen auf diese Werte eingestellt wird, ergeben sich optimale Kennwerte des Reibbelags 12 bei Belastungen.

Gemäß einer bevorzugten Ausführungsform der Erfindung ist vorgesehen, dass das Porositätsverhältnis des Reibbelags 12 größer 60 cm²/mm³ ist. Das Porositätsverhältnis gibt das Verhältnis der Materialoberfläche zum Porenvolumen an. Ein hohes Porositätsverhältnis ist im Hinblick auf das Verschleißverhalten vorteilhaft.

Besonders bevorzugt ist das Porositätsverhältnis größer 70 cm²/mm³, insbesondere größer 80 cm²/mm³. Auf diese Weise ergibt sich eine besonders hohe Standfestigkeit des mit dem Reibbelag 12 versehenen Reibrings 28.

Gemäß einer bevorzugten Ausführungsform der Erfindung ist vorgesehen, dass der Verschleißwert des Reibbelags 12 bei einer Öltemperatur von 60°C kleiner 3 mm³/MJ ist. Der Verschleißwert gibt das Verhältnis von Verschleiß zu geleisteter Reibarbeit an. Mit dem erfindungsgemäß hergestellten Reibbelag 12 lassen sich Verschleißwerte erreichen, die erheblich größer sind als die Verschleißwerte, die sich mit Reibpapier erreichen lassen.

Besonders bevorzugt ist der Verschleißwert kleiner 2,5, insbesondere kleiner 2. Ein solcher Reibbelag 12 hat ein Verschleißverhalten, das um den Faktor 3 besser ist als bei Reibpapier.

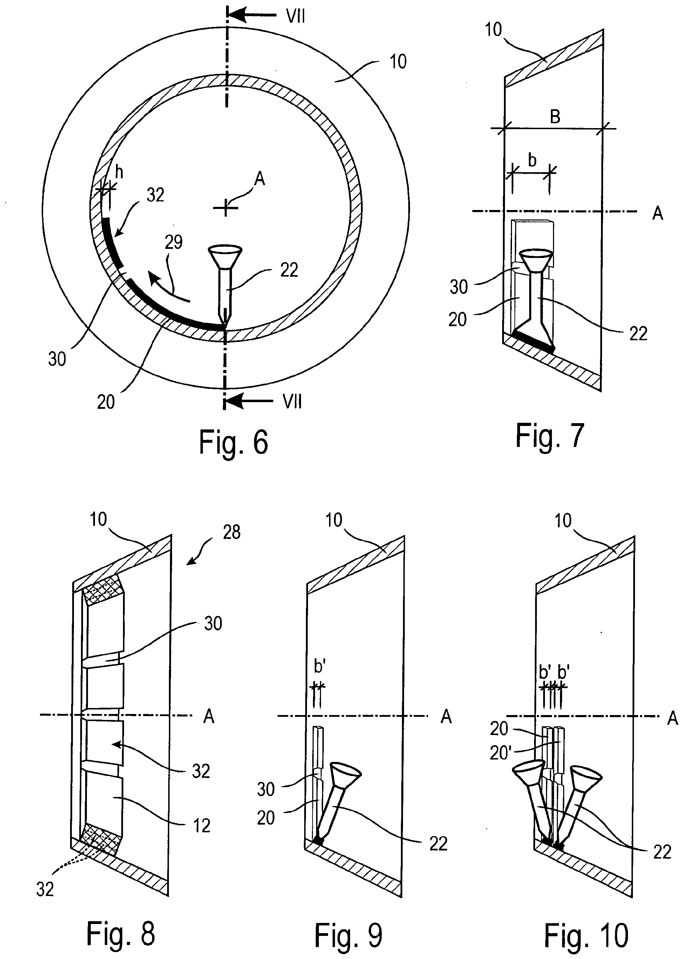

Abweichend von der in Figur 5 gezeigten Ausgestaltung des Reibrings 28 als ebene Scheibe können auch andere geometrische Formen verwendet werden. Ein Ausführungsbeispiel des Reibrings 28 mit einer alternativen geometrischen Form ist in den Figuren 6 bis 9 dargestellt. Der Reibring 28 weist hier einen konischen, d.h. kegelstumpfförmigen Träger 10 auf, der auf seiner Innenseite abschnittsweise mit dem Reibbelag 12 versehen ist. Alternativ oder zusätzlich ist natürlich auch eine außenseitige Beschichtung des Trägers 10 mit dem Reibbelag 12 denkbar.

Die Figur 6 zeigt eine axiale Frontalansicht des Trägers 10 während das Reibbelagausgangsmaterial 20 mittels der Dosierpumpe 22 auf die vorbereitete Fläche 14 des Trägers 10 aufgebracht wird. Die Dosierpumpe 22 ist dabei stationär angeordnet, wohingegen der in einer Drehvorrichtung eingespannte, ringförmige Träger 10 um seine Achse A gedreht wird (vgl. Pfeil 29). In anderen Verfahrensvarianten ist hingegen der ringförmige Träger 10 stationär angeordnet und die Dosierpumpe 22 wird während der Aufbringung des Reibbelagausgangsmaterials 20 gedreht.

Die Figur 7 zeigt einen Schnitt VII-VII durch den Träger 10 gemäß Figur 6. Hierbei wird deutlich, dass die Dosierpumpe 22 das Reibbelagausgangsmaterial 20 bereits unmittelbar in der später gewünschten Breite b des Reibbelags 12 auf den Träger 10 aufbringt. In dieser Ausführungsform wird das gesamte Reibbelagausgangsmaterial 20 für den späteren Reibbelag 12 während nur einer Umdrehung des Trägers 10 auf die vorbereitete Fläche 14 aufgetragen. Gemäß den Figuren 6 bis 8 entspricht die gewünschte Breite b des Reibbelags 12 etwa der halben Breite B des Trägers 10. Alternativ kann das Reibbelagausgangsmaterial 20 insbesondere auch in einer Breite b aufgebracht werden, die in etwa der gesamten Breite B des Trägers 10 entspricht.

Die Figur 8 zeigt den Reibring 28 nach seiner Fertigstellung, das heißt nach dem Aushärten des Reibbelagausgangsmaterials 20 auf dem Träger 10 zum Reibbelag 12 mit fester Konsistenz. Es ist gut zu erkennen, dass der Reibbelag 12 in Umfangsrichtung Unterbrechungen in Form von Nuten 30 aufweist. Außerhalb der Nuten 30 weist der Reibbelag 12 ein flaches oder alternativ ein konisches Querschnittsprofil auf.

Die Nuten 30 lassen sich besonders einfach erzeugen, indem der in die Drehvorrichtung eingespannte Träger 10 kontinuierlich in Richtung des Pfeils 29 um seine Achse A gedreht und die Zufuhr des Reibbelagausgangsmaterials 20 durch die Dosierpumpe 22 gezielt unterbrochen wird. Die Nuten 30 ermöglichen im Bereich des Reibbelags 12 eine gute Ölzirkulation, wodurch die im Betrieb des Reibrings 28 entstehende Reibungswärme schnell abgeführt werden kann. Im dargestellten Ausführungsbeispiel besteht der Reibbelag 12 aus mehreren, das heißt mindestens zwei separaten Blöcken, zwischen denen jeweils eine Nut 30 vorgesehen ist. Bei dieser Gestaltung kann die Nut 30 in vorteilhafter Weise unmittelbar bei der Herstellung des Reibbelags 12 erzeugt werden, ohne dass nach dem Aufbringen des Reibbelagausgangsmaterials 20 weitere Arbeitsschritte erforderlich sind.

Gemäß einer alternativen Ausgestaltung ist vorgesehen, dass die Nuten 30 als Vertiefung im Material des Reibbelags 12 ausgeführt sind. Diese Gestaltung beruht auf dem Grundgedanken, einen an sich einheitlichen, durchgehenden Reibbelag 12 zu verwenden, der lediglich an vorbestimmten Stellen mit Nuten 30 versehen wird. Diese Nuten 30 können beispielsweise in den Reibbelag 12 eingedrückt werden, bevor dieser vollständig ausgehärtet ist. Auf diese Weise verringert sich der Herstellungsaufwand des Reibrings 28, verglichen mit einem nachträglichen Einfräsen der Nuten 30.

In einer weiteren alternativen Ausgestaltung ist es auch denkbar, dass der Reibbelag 12 mehrschichtig ausgebildet ist. Dies ist in Figur 8 durch gestrichelt eingezeichnete Schichtgrenzen 32 angedeutet. Bei Verwendung lediglich einer Dosierpumpe 22 wird das Reibbelagausgangsmaterial 20 in diesem Fall beispielsweise über mehrere Umdrehungen des Trägers 10 bzw. der Dosierpumpe 22 aufgetragen.

Um die Ölzirkulation und damit das Abführen der Reibungswärme weiter zu verbessern, kann auch in Umfangsrichtung wenigstens eine Nut vorgesehen sein. Ein Reibbelag 12 mit derartigen Nuten lässt sich herstellen, indem das Reibbelagausgangsmaterial 20 als schmaler spiralförmiger Streifen aufgebracht wird. Eine solche Ausführung ist in Figur 9 angedeutet. Hierbei wird das Reibbelagausgangsmaterial 20 mit einer Breite b' « b mittels der Dosierpumpe 22 aufgetragen. Der ringförmige Träger 10 wird dabei nicht nur in Richtung des Pfeils 29 um seine Achse A verdreht, sondern erfährt auch einen geringen, aber stetigen Axialvorschub (gemäß Figur 9 nach links), sodass sich nach mehreren Umdrehungen des Trägers 10 das Reibbelagausgangsmaterial 20 spiralförmig über eine gewünschte Breite b des Trägers 10 erstreckt. Bei ausreichendem Axialvorschub lässt sich so eine Spiralnut realisieren, deren Nutbreite mit geringer werdendem Axialvorschub abnimmt. Bei sehr geringem Axialvorschub (kleiner als b' pro Trägerumdrehung) sind auch Ausführungsformen mit einem axialen Überlapp des Reibbelagausgangsmaterials 20 denkbar. Dadurch können gerichtete (anisotrope) Eigenschaften im Reibbelag 12 erzielt werden.

Ausgehend von den beispielhaft dargestellten Nuten 30 in den Figuren 6 bis 10 wird ausdrücklich hervorgehoben, dass auch andere Nutgeometrien bzw. Nutverläufe denkbar sind. So können die Nuten 30 gebogen verlaufen, sich schräg zur Umfangs- oder Axialrichtung erstrecken oder nur in Teilbereichen des Reibbelags 12 vorhanden sein. Über das Zusammenspiel zwischen der Drehung des Trägers 10, der Unterbrechung der Zufuhr des Reibbelagausgangsmaterials 20 mittels der Dosierpumpe 22 sowie ggf. des Axialvorschubs lassen sich auch solche Nutformen mit geringem Aufwand erzeugen.

Ferner kann der Reibbelag 12 durch mehrmaliges Durchlaufen des Aufbringungsprozesses, insbesondere unter Verwendung unterschiedlicher Reibbelagausgangsmaterialien 20, 20', mehrschichtig aufgebaut werden. Alternativ kann durch gleichzeitige Benutzung mehrerer Dosierpumpen 22 beim Aufbringen des Reibbelagausgangsmaterials 20 bzw. der Reibbelagausgangsmaterialien 20, 20' eine gewünschte Schichtung erzielt werden.

Die Figur 10 zeigt beispielsweise eine Variante zum Aufbringen des Reibbelagausgangsmaterials 20 auf den Träger 10 mittels zweier Dosierpumpen 22. Diese Dosierpumpen 22 können unterschiedliche Reibbelagausgangsmaterialien 20, 20' auftragen, so dass sich ein mehrschichtiger Reibbelag 12 mit unterschiedlichen Schichteigenschaften ergibt. Durch axial versetzt angeordnete Dosierpumpen 22 (Figur 10) entsteht eine Schichtung in axialer Richtung, wobei sich bei geeigneter Rotation und entsprechendem axialen Vorschub des Trägers 10 die verschiedenen Reibbelagausgangsmaterialien 20, 20' in axialer Richtung abwechseln. Hingegen entsteht durch in Umfangsrichtung versetzt angeordnete Dosierpumpen 22 eine Schichtung in radialer Richtung, wie sie in Figur 8 durch die Schichtgrenzen 32 angedeutet ist.

In einer speziellen Ausführungsvariante wird je Reibbelagschicht des mehrschichtigen Reibbelags 12 ein unterschiedliches Reibbelagausgangsmaterial 20, 20' verwendet.

Ein wesentliches Merkmal der beschriebenen Reibringe 28 ist die Zusammensetzung des Reibbelags 12. Das Reibbelagausgangsmaterial 20, 20' des Reibbelags 12 ist ein Gemisch zumindest aus einem duroplastischen Bindemittel und einem organischen Füllstoff, wobei das Gemisch eine nicht-fließfähige, pastöse Verarbeitungskonsistenz und der Reibbelag 12 eine feste Endkonsistenz aufweist.

Als duroplastisches Bindemittel kann ein Harz, insbesondere ein pulverförmiges Resol-Phenolharz verwendet werden. Der Masseanteil des Harzes ist in einem weiten Bereich variabel. Die untere Grenze für den Anteil des Harzes am Feststoffanteil des Reibbelags 12 ergibt sich aus der Notwendigkeit, dass genügend Harz zur Verfügung steht, um den Füllstoff und die gegebenenfalls vorhandenen Fasern zu einem widerstandsfähigen Reibbelag 12 zu binden. Die Obergrenze des Anteils des Harzes am Feststoffanteil ergibt sich aus der Notwendigkeit, dass der Reibbelag 12 für die Festigkeit und Verschleißfestigkeit einen gewissen Anteil an Füllstoffen enthalten muss. Bevorzugte Werte für den Anteil des Harzes am Feststoffanteil betragen beispielsweise 15 % bis 50 %, bevorzugt etwa 35 %.

Um die Eigenschaften des Reibbelags 12 weiter zu verbessern, kann in einigen Ausführungsformen des Reibrings 28 der Anteil des duroplastischen Bindemittels über die Höhe h des Reibbelags 12 variieren, insbesondere vom Träger 10 zur Reibfläche 32 hin abnehmen. Dies lässt sich speziell bei mehrschichtigen Reibbelägen 12, wie sie in Figur 8 angedeutet sind, mit geringem Aufwand realisieren.

Gemäß einer bevorzugten Ausführungsform ist vorgesehen, dass der Reibbelag 12 einen hitzebeständigen Füllstoff enthält. Der hitzebeständige Füllstoff verbessert die Reibeigenschaften und das Verschleißverhalten. Der Begriff "Füllstoff" steht hier als Oberbegriff sowohl für einen sortenreinen Füllstoff als auch für eine Mischung aus verschiedenen Materialien, die zusammen den Füllstoff bilden.

Der Masseanteil des Füllstoffs kann bis maximal 85 % des Feststoffanteils betragen. Als besonders vorteilhaft hat sich herausgestellt, wenn der Masseanteil des Füllstoffs im Bereich von 60 % bis 70 %, insbesondere bei etwa 65 % des Feststoffanteils liegt. Diese Werte haben sich als guter Kompromiss zwischen Kosten und Leistungsverhalten des Reibbelags 12 herausgestellt.

Graphit ist als Füllstoff besonders geeignet, da er bei den auftretenden Temperaturen seine Eigenschaften nicht ändert. Alternativ können aber auch Koks, Friction-Dust, o.ä. als Füllstoff verwendet werden.

Um eine gewünschte Viskosität des Reibbelagausgangsmaterials 20, 20' zu erhalten und dessen Verarbeitung zu erleichtern, ist der Reibbelag 12 in einer bevorzugten Ausführungsform im Wesentlichen faserfrei hergestellt. Es hat sich nämlich herausgestellt, dass der Reibbelag 12 auch ohne Fasern den Anforderungen hinsichtlich Reibwert und Verschleiß genügt.

In einer alternativen Ausführungsform des Reibrings weist der Reibbelag 12 einen geringen Faseranteil auf, wobei der Masseanteil der Fasern im Bereich von 1 % bis 20 %, vorzugsweise etwa 5 % des Feststoffanteils des Reibbelags 12 beträgt. Bei den Fasern handelt es sich überwiegend, vorzugsweise ausschließlich um nicht-fibrillierte Fasern, damit sich eine gewünschte Konsistenz einstellen lässt und eine einfache Verarbeitbarkeit gegeben ist. Abhängig von der jeweiligen Zusammensetzung des Reibbelagausgangsmaterials 20, 20' kann auch dieser eher geringe Faseranteil zu einer Verbesserung der mechanischen Eigenschaften des Reibbelags 12 beitragen.

Als Fasern können grundsätzlich alle Arten von Fasern verwendet werden, welche die erforderliche Temperaturbeständigkeit haben, insbesondere eine Schmelz- oder Zersetzungstemperatur größer 400 °C. Besonders geeignet sind Karbonfasern, Glasfasern, Phenolharzfasern, Polyacrylnitrilfasern und/oder Melaminfasern. Ein besonderes Merkmal dieser Fasern besteht darin, dass sie eine vergleichsweise geringe Länge haben, insbesondere nicht länger als 1 mm sind. Besonders bevorzugt beträgt die Länge der Fasern maximal 0,3 mm und darunter.

Das Reibbelagausgangsmaterial 20, 20' kann in der Verarbeitungskonsistenz ein Lösungsmittel wie zum Beispiel Wasser, Methanol oder Ethanol aufweisen. Besonders bevorzugt wird Wasser zugegeben, da dessen Verwendung sowohl unter Kostengesichtspunkten als auch unter Umweltgesichtspunkten vorteilhaft ist. Statt der separaten Zugabe von Lösungsmittel kann auch das Bindemittel bereits in gelöster Form zugegeben werden, beispielsweise als Phenolharzlösung.

Zur Einstellung einer gewünschten Verarbeitungskonsistenz kann dem Reibbelagausgangsmaterial 20, 20' optional ein Verdickungs- oder Thixotropiermittel zugegeben werden. Das Thixotropiermittel erleichtert die Verarbeitung des Reibbelagausgangsmaterials 20, 20', da es während des Auftragens die Viskosität herabsetzt, jedoch nach dem Auftragen des Reibbelagausgangsmaterials 20, 20' die Viskosität erhöht.

Vorzugsweise werden Thixotropiermittel aus der Gruppe der Schichtsilikate verwendet, da diese das Reib- und Verschleißverhalten auch bei hohen Betriebstemperaturen nicht beeinflussen.

Als besonders geeignet zur Verwendung bei Reibbelägen haben sich außerdem Thixotropiermittel aus der Gruppe der Smektite erwiesen.

Besonders bevorzugt enthält das Thixotropiermittel Lithium-Ionen. Auch dies ist vorteilhaft im Hinblick auf dessen Verwendung bei einem Reibring 28, der dauerhaft hohen Verschleißbelastungen bei hohen Temperaturen ausgesetzt ist.

Der beschriebene Reibring 28 ist besonders geeignet als Synchronring in einem Fahrzeuggetriebe sowie für nasslaufende Lamellenreibsysteme von Fahrzeugen, insbesondere nasslaufenden Kupplungen oder Bremsen.

## Patentansprüche

1. Verfahren zur Herstellung eines Reibrings, der einen Träger (10) und einen Reibbelag (12) aufweist, enthaltend die Schritte:
a) es wird ein Träger (10) bereitgestellt;
b) eine Fläche (14) des Trägers (10), die mit dem Reibbelag (12) versehen werden soll, wird vorbereitet;
c) ein Reibbelagausgangsmaterial (20) wird in einer im Wesentlichen formstabilen, pastösen Verarbeitungskonsistenz ohne eine zusätzliche, das Reibbelagausgangsmaterial (20) seitlich begrenzende Form auf die vorbereitete Fläche (14) aufgetragen;
d) das Reibbelagausgangsmaterial (20) wird bearbeitet und härtet schließlich zum Reibbelag (12) mit im Wesentlichen fester Endkonsistenz aus.

2. Verfahren nach Anspruch 1, **dadurch gekennzeichnet, dass** das pastöse Reibbelagausgangsmaterial (20) in Schritt c) mittels wenigstens einer Dosierpumpe (22) aufgetragen wird.

3. Verfahren nach Anspruch 1 oder 2, **dadurch gekennzeichnet, dass** das Reibbelagausgangsmaterial (20) in Schritt c) während einer Umdrehung des Trägers (10) auf die vorbereitete Fläche (14) aufgetragen wird.

4. Verfahren nach Anspruch 1 oder 2, **dadurch gekennzeichnet, dass** das Reibbelagausgangsmaterial (20) in Schritt c) während mehrerer Umdrehungen des Trägers (10) spiralförmig auf die vorbereitete Fläche (14) aufgetragen wird.

5. Verfahren nach einem der Ansprüche 1 bis 4, **dadurch gekennzeichnet, dass** nach Schritt c) Reibpartikel auf das pastöse Reibbelagausgangsmaterial (20) aufgebracht werden, ferner vorzugsweise **dadurch gekennzeichnet, dass** die Reibpartikel bei der Bearbeitung des Reibbelagausgangsmaterials (20) in Schritt d) zumindest teilweise in das Reibbelagausgangsmaterial (20) eindringen.

6. Verfahren nach einem der Ansprüche 1 bis 5, **dadurch gekennzeichnet, dass** das Reibbelagausgangsmaterial (20) in Schritt d) getrocknet und/oder heißgepresst wird.

7. Verfahren nach einem der vorhergehenden Ansprüchen, **dadurch gekennzeichnet, dass** der Reibbelag (12) im Wesentlichen faserfrei hergestellt ist.

8. Verfahren nach Anspruch 1 bis 6, **dadurch gekennzeichnet, dass** der Reibbelag (12) Fasern, insbesondere ausschließlich nicht-fibrillierte Fasern aufweist.

9. Verfahren nach Anspruch 8, **dadurch gekennzeichnet, dass** der Masseanteil der Fasern im Bereich von 1 % bis 20 % des Feststoffanteils des Reibbelags (12) beträgt.

10. Verfahren nach einem der vorhergehenden Ansprüche, **dadurch gekennzeichnet, dass** das Reibbelagausgangsmaterial (20) in der Verarbeitungskonsistenz ein Lösungsmittel aufweist.

11. Verfahren nach einem der vorhergehenden Ansprüche, **dadurch gekennzeichnet, dass** das Reibbelagausgangsmaterial (20) einen Stoff zur Einstellung einer gewünschten Verarbeitungskonsistenz aufweist.

12. Verfahren nach einem der vorhergehenden Ansprüche, **dadurch gekennzeichnet, dass** der Reibbelag (12) mehrschichtig erzeugt wird.

13. Verfahren nach Anspruch 12, **dadurch gekennzeichnet, dass** zur Erzeugung des Reibbelags wenigstens zwei Reibbelagschichten mit unterschiedlichem Reibbelagausgangsmaterial (20) verwendet werden.

14. Verfahren nach einem der vorhergehenden Ansprüche, **dadurch gekennzeichnet, dass** der Reibbelag (12) im Bereich seiner Reibfläche Reibpartikel, insbesondere Kokspartikel, aufweist.

15. Verfahren nach einem der vorhergehenden Ansprüche, **dadurch gekennzeichnet, dass** der Anteil des duroplastischen Bindemittels über eine Höhe (h) des Reibbelags (12) variiert, insbesondere vom Träger (10) zu einer Reibfläche hin abnimmt.

## Claims

1. A method of producing a friction ring which includes a carrier (10) and a friction lining (12), comprising the steps of:
a) providing a carrier (10);
b) preparing a surface (14) of the carrier (10), which surface (14) is to be provided with the friction lining (12);
c) applying a friction lining starting material (20) in a substantially dimensionally stable, pasty processing consistency onto the prepared surface (14) without an additional mold bordering the friction lining starting material (20) on the sides;
d) treating the friction lining starting material (20), which finally cures to form the friction lining (12) having a substantially solid final consistency.

2. The method according to claim 1, **characterized in that** the pasty friction lining starting material (20) is applied in step c) by means of at least one metering pump (22).

3. The method according to claim 1 or 2, **characterized in that** in step c) the friction lining starting material (20) is applied onto the prepared surface (14) during one revolution of the carrier (10).

4. The method according to claim 1 or 2, **characterized in that** in step c) the friction lining starting material (20) is spirally applied onto the prepared surface (14) during several revolutions of the carrier (10).

5. The method according to any of claims 1 to 4, **characterized in that** after step c), friction particles are applied onto the pasty friction lining starting material (20), further preferably **characterized in that** during the treatment of the friction lining starting material (20) in step d), the friction particles penetrate at least in part into the friction lining starting material (20).

6. The method according to any of claims 1 to 5, **characterized in that** in step d), the friction lining starting material (20) is dried and/or hot-pressed.

7. The method according to any of preceding claims, **characterized in that** the friction lining (12) is produced to be substantially fiber-free.

8. The method according to claims 1 to 6, **characterized in that** the friction lining (12) includes fibers, in particular exclusively non-fibrillated fibers.

9. The method according to claim 8, **characterized in that** the mass fraction of the fibers is in the range of from 1 % to 20 % of the solid fraction of the friction lining (12).

10. The method according to any of the preceding claims, **characterized in that** the friction lining starting material (20) includes a solvent in the processing consistency.

11. The method according to any of the preceding claims, **characterized in that** the friction lining starting material (20) includes a substance for adjusting a desired processing consistency.

12. The method according to any of the preceding claims, **characterized in that** the friction lining (12) is produced to have multiple layers.

13. The method according to claim 12, **characterized in that** for producing the friction lining, at least two friction lining layers having different friction lining starting materials (20) are used.

14. The method according to any of the preceding claims, **characterized in that** the friction lining (12) includes friction particles, in particular coke particles, in the region of its friction surface.

15. The method according to any of the preceding claims, **characterized in that** the fraction of the thermosetting binder varies over a height (h) of the friction lining (12), in particular decreases from the carrier (10) towards a friction surface.

## Revendications

1. Procédé de fabrication d'un anneau de friction qui présente un support (10) et une garniture de friction (12), comprenant les étapes dans lesquelles :
a) un support (10) est fourni ;
b) une surface (14) du support (10) devant être pourvue de la garniture de friction (12) est préparée ;
c) un matériau de base (20) de garniture de friction est appliqué sur la surface préparée (14) dans une consistance de façonnage pâteuse sensiblement indéformable, sans moule additionnel délimitant le matériau de base (20) de garniture de friction latéralement ;
d) le matériau de base (20) de garniture de friction est traité et durcit finalement de manière à former la garniture de friction (12) qui présente une consistance finale sensiblement solide.

2. Procédé selon la revendication 1, **caractérisé en ce que** le matériau de base (20) de garniture de friction pâteux à l'étape c) est appliqué au moyen d'au moins une pompe de dosage (22).

3. Procédé selon la revendication 1 ou 2, **caractérisé en ce que** le matériau de base (20) de garniture de friction à l'étape c) est appliqué sur la surface préparée (14) pendant une rotation du support (10).

4. Procédé selon la revendication 1 ou 2, **caractérisé en ce que** le matériau de base (20) de garniture de friction à l'étape c) est appliqué en spirale sur la surface préparée (14) pendant plusieurs rotations du support (10).

5. Procédé selon l'une des revendications 1 à 4, **caractérisé en ce qu'**après l'étape c), des particules de friction sont appliquées sur le matériau de base (20) de garniture de friction pâteux, en outre de préférence **caractérisé en ce que** les particules de friction pénètrent au moins partiellement dans le matériau de base (20) de garniture de friction lors du traitement du matériau de base (20) de garniture de friction à l'étape d).

6. Procédé selon l'une des revendications 1 à 5, **caractérisé en ce que** le matériau de base (20) de garniture de friction à l'étape d) est séché et/ou pressé à chaud.

7. Procédé selon l'une des revendications précédentes, **caractérisé en ce que** la garniture de friction (12) est fabriquée sensiblement sans fibres.

8. Procédé selon l'une des revendications 1 à 6, **caractérisé en ce que** la garniture de friction (12) présente des fibres, en particulier exclusivement des fibres non fibrillées.

9. Procédé selon la revendication 8, **caractérisé en ce que** la fraction massique des fibres est comprise dans la plage de 1% à 20% de la fraction en matières solides de la garniture de friction (12).

10. Procédé selon l'une des revendications précédentes, **caractérisé en ce que** le matériau de base (20) de garniture de friction comporte un solvant dans la consistance de façonnage.

11. Procédé selon l'une des revendications précédentes, **caractérisé en ce que** le matériau de base (20) de garniture de friction comporte une substance pour l'ajustage d'une consistance de façonnage souhaitée.

12. Procédé selon l'une des revendications précédentes, **caractérisé en ce que** la garniture de friction (12) est produite en plusieurs couches.

13. Procédé selon la revendication 12, **caractérise en ce qu'**au moins deux couches de garniture de friction comportant différents matériaux de base (20) de garniture de friction sont utilisées pour produire la garniture de friction.

14. Procédé selon l'une des revendications précédentes, **caractérisé en ce que** dans la zone de sa surface de friction, la garniture de friction (12) présente des particules de friction, en particulier des particules de coke.

15. Procédé selon l'une des revendications précédentes, **caractérisé en ce que** la fraction du liant thermodurcissable varie sur une hauteur (h) de la garniture de friction (12) et diminue en particulier du support (10) vers une surface de friction.
